# EUROPEAN PATENT APPLICATION

(11) **EP 1 939 701 A2**
(43) Date of publication of application: **02.07.2008**
(21) Application number: 07119425.2
(22) Date of filing: 26.10.2007
(51) Int. Cl.: G05B 9/00, G05D 7/00

(54) **Mechanical controller for a hydraulically controlled system**

(30) Priority: 30.10.2006 US 554320
(71) Applicant: General Electric Company, Schenectady, NY 12345 (US)
(72) Inventor: Warner, David Arthur, Fort Collins, CO 80525 (US)
(74) Representative: Bedford, Grant Richard

(57) **Abstract**

A mechanical controller (10) for a hydraulically controlled system, the controller including: a valve housing (27)including an inner chamber (28), a hydraulic fluid input port (22) and a hydraulic fluid output port (26), wherein the hydraulic fluid output port is connectable to the hydraulically controlled system (14,15); a bushing (32) mounted in the inner chamber, the bushing having a bushing port (40,42) that is movable into and out of alignment with the control and (44) of a pilot value (34) to control hydraulic fluid flow through the valve; a bushing actuator (38) coupled to move the bushing in the inner chamber based on a first operational condition (13,58) of the hydraulically controlled system; a pilot valve (34) slidably mounted in the bushing, the pilot valve having a flow passage (44) which allows hydraulic fluid to flow through the bushing when in a first position in the bushing and prevents the flow of hydraulic fluid when the pilot valve is in a second position in the bushing; a pilot valve actuator (46) coupled to move the pilot valve between the first position and the second position based on an error signal (56), the error signal generated on a comparison of a set point (48) and a second operating condition (54) of the hydraulically controlled system.

## Description

The present invention relates generally to electronically controlled hydraulic amplifiers such as used to control servomotors and valves for various applications, such as to control governor distributing valves for hydroelectric turbine and generator systems.

Hydraulic amplifiers are typically electronically controlled when applied to control servomotors that operate hydroelectric turbines. These hydraulic amplifiers may actuate servomotors that adjust the rate of water flowing through the conduits in a hydroelectric system. The hydraulic amplifiers are electronically controlled by a computer control system. The control system generates electrical signals that actuate the hydraulic amplifier, which in turn hydraulically moves the servomotors that adjust the water valves.

A failure of a hydraulic amplifier can disable a governor distributing valve and its associated water turbine. Electronic control systems on occasion experience failures that result in improper control of one or more hydraulic amplifiers. For critical processes, existing electronically controlled hydraulic amplifiers utilize redundant electronic control systems or open loop mechanical methods that lack positive, mechanical control capabilities. Electronically controlled hydraulic amplifiers do not typically have provisions for mechanical internal feedback control from a main output stage to the pilot stage (inner loop feedback) of the servo motor that is controlled by the amplifier. There is a long felt need for an electronically controlled hydraulic amplifier that can, as an alternative operational mode, be operated without electronic control.

According to one aspect of the invention, there is provided a manually manipulated, closed loop servomotor controller has been developed as a redundant controller, e.g., back-up mechanical controller, to an electronically controlled hydraulic amplifier controller. The back-up mechanical controller allows for the transfer of control from an electronic hydraulic amplifier to the manually adjustable mechanical controller. A controlled input, e.g., a manually adjustable set point, and feedback inputs from the servomotor are used by the mechanical back-up controller to adjust the hydraulic fluid flow to the servomotor. The controlled input, together with a mechanical multiple stage feedback system, provides position and control of an output state of the mechanical controller.

According to one aspect of the invention, there is provided a mechanical controller, e.g., mechanical pilot valve, has been developed for a hydraulically controlled system, the controller including: a valve housing including an inner chamber, a hydraulic fluid input port and a hydraulic fluid output port, wherein the hydraulic fluid output port is connectable to the hydraulically controlled system; a bushing mounted in the inner chamber, the bushing having a bushing port that is movable into and out of alignment with the hydraulic fluid input and output ports to allow hydraulic fluid to flow through the valve when the bushing port is in alignment with the hydraulic fluid input and output ports; a bushing actuator coupled to move the bushing in the inner chamber based on a first operational condition of the hydraulically controlled system; a pilot valve slidably mounted in the bushing, the pilot valve having a flow passage which allows hydraulic fluid to flow through the bushing when in a first position in the bushing and prevents the flow of hydraulic fluid when the pilot valve is in a second position in the bushing; a pilot valve actuator coupled to move the pilot valve between the first position and the second position based on an error signal, the error signal generated on a comparison of a set point and a second operating condition of the hydraulically controlled system.

A mechanical controller has been developed for a hydraulically controlled servomotor for controlling a water valve, the controller comprising: a valve housing including an inner chamber, a hydraulic fluid input port and a hydraulic fluid output port, wherein the hydraulic fluid output port is connectable to a hydraulic fluid input port of the hydraulically controlled system; a bushing slidably mounted in the inner chamber, the bushing having a bushing input port and a bushing output port that is movable into and out of alignment with the hydraulic fluid input and output ports to allow hydraulic fluid to flow through the valve when the bushing input and output ports are in alignment with the hydraulic fluid input and output ports; a bushing lever arm coupled to move the bushing in the inner chamber based on a first operation condition of the hydraulically controlled system; a pilot valve slidably mounted in the bushing, the pilot valve having a flow passage which allows hydraulic fluid to flow through the bushing when in alignment with the bushing input and output ports and reduces the flow through the bushing as the flow passage moves out of alignment with the bushing input and output ports; and a pilot valve lever arm coupled to move the pilot valve based on an error signal, the error signal generated by balancing the pilot valve lever arm between a set point and a second operating condition of the hydraulically controlled system.

A method has been developed for controlling a hydraulically controlled system comprising: applying hydraulic fluid to the hydraulically controlled system using an electronically controlled hydraulic amplifier; switching control from the electronically controlled hydraulic amplifier to a mechanically controlled hydraulic valve controller; establishing a desired set point for the mechanically controlled hydraulic valve controller; determining an error signal between the desired set point and an actual operating condition of the hydraulically controlled system; and applying the error signal to the mechanically controlled hydraulic valve controller which adjusts the hydraulic fluid flow to the hydraulically controlled system to reduce the error.

The method may further comprise applying a feedback condition to the mechanically controlled hydraulic valve controller to provide a secondary adjustment to the hydraulic fluid flow, where the feedback condition represents a different operating condition of the hydraulically controlled system than the actual operating condition used to determine the error signal. The method may include controlling a servomotor controlling a water valve, and the desired set point is a displacement of the servomotor that determines a operating position of the water valve. The method may further comprise applying a feedback condition to the mechanically controlled hydraulic valve controller to provide a secondary adjustment to the hydraulic fluid flow, where the feedback condition represents the displacement of the hydraulic amplifier main spool. In addition, the method may comprise shutting off the hydraulic fluid flow to the mechanically controlled hydraulic valve and activating the electronically controlled hydraulic amplifier. The method establishes a closed loop feedback control wherein the error signal correlates to hydraulic fluid flow from the output port of the valve housing.

Various aspects and embodiments of the present invention will now be described in connection with the accompanying drawings, in which:

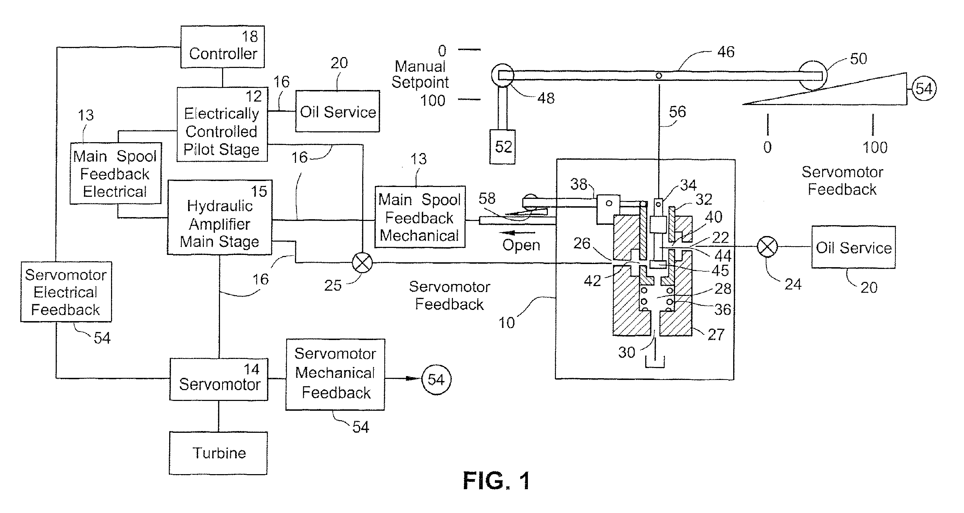

FIGURE 1 is a schematic diagram of a mechanical controller that is a redundant system to an electronically controlled hydraulic amplifier.

A method and system have been developed to transfer servomotor control of an electronically controlled hydraulic amplifier to a mechanical controller. The mechanical controller includes a proportional actuator, e.g., a manual pilot valve, and a mechanical internal feedback to provide a mechanical positioning circuit for a servomotor. The mechanical controller provides a mechanical control method that is automatically initiated (by a computer controller) in the event of a failure of an electrically controlled hydraulic amplifier.

FIGURE 1 is a schematic of a mechanically controlled pilot valve 10 that serves as a redundant controller for an electronically controlled pilot valve 12. Both pilot valves 10, 12 can be used to control a hydraulic amplifier 15, e.g., main stage, that actuates a servomotor 14 or other hydraulic system. The servomotor 14 may control a governor distributing valve for a hydroelectric system, e.g. turbine, that passes a large flow of oil, e.g., 1,000 gallons per minute.

The operating position of the servomotor 14 is controlled by the main stage hydraulic amplifier 15. The amplifier 15 controls the servomotor 14 by applying a hydraulic fluid, e.g., oil flow, to an input of the servomotor via fluid conduit 16. The amount of hydraulic fluid flow applied by the main stage hydraulic amplifier 15 to the servomotor 14 determines the operational setting for the servomotor. The pilot valves 10, 12, convert feedback signals, e.g., servomotor displacement 54 and displacement speed 13, to adjustments to the hydraulic control of the servomotor. In effect, the feedback signals are amplified to control the servomotor 14. The feedback signals may be electrical or mechanical depending on whether the electronically controlled pilot stage 12 is active or the mechanically controlled pilot valve 10 is active.

During normal operation, the electronically controlled pilot valve 12 actuates the hydraulic amplifier main stage 15 and the servomotor 14, and the mechanical pilot valve 10 is non-operational. A controller 18, e.g., an electric computer, operates the electronically controlled pilot valve 18. The mechanical pilot valve is made non-operational by shutting off hydraulic fluid flow from a source of oil 20 to an input 22 of the mechanical pilot valve 10. If and when the controller 18, determines that the mechanical pilot valve 10 should be substituted for the electronically controlled pilot valve 12, a pressurized source of hydraulic fluid 20 is applied to the input 22 of the mechanical pilot valve 10. For example, a valve 24 may be actuated by the controller 18 to apply oil pressure to the mechanical pilot valve 10. Similarly, valve 25 may be switched to change control from the electronically controlled pilot valve 12 to the mechanical pilot valve 10, where the control is for the hydraulic fluid flow to the hydraulic amplifier main stage 15.

The controller 18 may switch to the mechanically mechanical pilot valve 10 if the electronically controlled pilot valve 12 is determined to have failed, operating outside predetermined ranges or is taken offline for maintenance or replacement. When the electronically controlled pilot valve 12 is again operational, the controller activates the pilot valve 12 and shuts off hydraulic fluid flow to the mechanical pilot valve 10. Transition between the electronically controlled pilot valve 12 and the mechanically controlled pilot valve 10 is smooth and uncomplicated because the transition involves switching valve 25 which applies hydraulic fluid pressure to the hydraulic amplifier main stage 15 and switches ON/OFF the electronic pilot valve 12. Oil service 20 to the mechanically mechanical pilot valve 10 is turned OFF via switch 24 when the that valve 10 is disabled.

The mechanically controlled pilot valve 10 regulates the hydraulic fluid flow from the source 20 to the hydraulic amplifier main stage 15. The mechanical pilot valve includes a valve housing 27 which includes the hydraulic oil input port 22 and an oil output port 26. The hydraulic oil output port 26 is connected to the hydraulic amplifier main stage 15 by a hydraulic line 16.

The valve housing 27 may be a metallic cylinder that includes a cylindrical inner chamber 28. The inner chamber 28 includes a hydraulic fluid drain port 30 to discharge oil that seeps into the lower region of the chamber. The upper end of the chamber 28 is open to receive a cylindrical bushing 32, e.g., a sleeve, and a pilot valve 34, e.g., a piston.

The bushing 32 may be a hollow cylinder sleeve having a lower base that is closed except for a small drain to allow some hydraulic fluid to seep into the lower region of the chamber and provide lubrication to a coil spring 36. The bushing 32 slides up and down in the chamber 28 of the valve housing. A coil spring biases the bushing upward in the valve housing. The top of the bushing 32 is pivotably connected to a lever arm 38 that positions the bushing in the chamber 28 of the valve housing 27. The position of the bushing in the chamber is determined by the lever arm 38 that responds to movements of the hydraulic amplifier main spool.

The bushing 32 includes a side input port 40 and side output port 42. These ports slide up and down in the chamber 28, with the bushing. Hydraulic fluid flows through the valve when the bushing output port 42 is uncovered by the plunger land 45. When oil flows through output port 26, the hydraulic amplifier main spool will be in motion. When the plunger land 45 and bushing output port 42 are aligned, oil will not flow and the hydrualic amplifier main spool will be stationary.

The pilot valve 34 is movable up and down in the bushing 32. The pilot valve regulates the hydraulic fluid flow through the bushing and thus the hydraulic fluid flow through the valve 24. The pilot valve may be the primary determiner of the rate of hydraulic fluid through the valve housing. The pilot valve has a necked region 44, flow through port or other flow passage feature that regulates the flow of hydraulic fluid from input port 40 to the output port 42 of the bushing. Hydraulic fluid may flow through the bushing when the necked region of the pilot valve is aligned with the input/output ports 40, 42 of the bushing. Hydraulic fluid is blocked from flowing through the bushing (and thus the valve 24) when the necked region 4 of the pilot valve is not aligned and a control land 45 of the pilot valve is aligned with the output port 42 of the bushing. The rate of hydraulic fluid flow through the bushing may be adjusted by moving the pilot valve in the sleeve. As the necked region of the pilot valve moves into alignment with the input/output ports of the bushing the potential rate of hydraulic fluid flow through the sleeve increases. The necked region may be shaped such that the rate of hydraulic fluid flow gradually changes as the pilot valve moves with respect to the bushing.

The position of the pilot valve 34 in the chamber 28 is controlled by an actuator lever arm 46. The position of the bushing, e.g., sleeve, in the chamber is determined by the lever arm 38. The relative position of the pilot valve in the bushing depends on both lever arms 38, 46.

In one embodiment, the movement of the pilot valve lever arm, e.g., actuator, 46 initiates changes of the hydraulic fluid flow rate through the valve. In response, the lever arm, e.g., actuator, 38 for the bushing will restore the aligned relationship between bushing output port 42 and pilot valve land 45, arresting the movement of the hydrualic amplifier main spool. This restoration (feedback) of the hydraulic amplifier, established mechanically, allows the mechanical controller to respond with a correcting action to an input or output relationship that is not in equilibrium.

The rate of hydraulic fluid flow through the valve depends on the positions of the bushing 32 and the pilot valve 34 with respect to each other and the relative position of the bushing in the chamber 28 of the valve housing. The position of the valve in the bushing may be the dominate influence on the hydraulic fluid flow through the valve. The position of the bushing in the chamber may be a less dominate influence on hydraulic fluid flow.

The lever arm 46, e.g., a floating lever, positions the pilot valve in the valve chamber 28 based on the relative relationship between a desired set point 48, and the actual position 50 of the servomotor 14. The position of the servomotor determines the water valve 15 position. The desired servomotor operational position may be a desired final servomotor position (which correlates to a desired valve 15 position). The desired set point may be input manually by a manual control device 52 or may be automatically set by the controller 18. The actual position of the servomotor may be a feedback signal 54, e.g., a ramp signal, indicative of the actual servomotor position. The difference between the desired set point 48 and the actual final servomotor position is reflected in the position of the lever arm 46 and is applied as an error signal 56 that determines the position of the pilot valve 34 in the chamber 28. Depending on the value of the error signal 56, the pilot valve 12 is positioned to move the main spool of the hydraulic amplifier main stage 15 by adjusting the hydraulic fluid flow from the valve (port 26).

A mechanical position feedback signal 58, e.g., main spool displacement speed feedback 13, from the main spool of the hydraulic amplifier 15 manipulates an inner loop feedback that maintains stable operation of the hydraulic amplifier main stage. The feedback signal 58 may cause the bushing 32 to move to reduce the hydraulic fluid flow to the hydraulic amplifier main stage 15. The feedback signal 58 actuates the lever 38 for the pilot valve bushing (sleeve).

The mechanical amplifier 10 may be a proportional actuator that emulates some of the control functions of an electronically controlled pilot valve 12. The mechanically controlled amplifier 10 is controlled by setting a manual set point 48, 52. The mechanically controlled pilot valve 12 can be used to provide control functions normally provided by the electronically controlled pilot valve 12, such as shutdown protection and control, and integration of monitoring and switching schemes from normal control (electronically controlled, pilot valve 12) to manual control (mechanically controlled pilot valve 10). The transition from electronically controlled pilot valve 12 to the mechanical pilot valve 10 includes switching hydraulic valves 24, 25 that couple the oil source 20, pilot valves and the hydraulic amplifier main stage 15.

The mechanically controlled amplifier 10 may provide: implementation of a manual control circuit that does not interfere or complicate an electronically controlled hydraulic amplifier; flexibility to implement control features for switching between normal electronic control and manual control based on the configuration of the individual components, e.g., the electronically controlled hydraulic amplifier and servomotor; implementation of various shutdown controls that can be used in both normal and manual control modes; and operation of servomotor control functions when no power is available by use of a truly mechanical manual solution.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.
Various aspects and embodiment of the present invention will now be defined in the following numbered clauses:
1. A mechanical controller for a hydraulically controlled system, the controller comprising:
   a valve housing including an inner chamber, a hydraulic fluid input port and a hydraulic fluid output port, wherein the hydraulic fluid output port is connectable to the hydraulically controlled system;
   a bushing mounted in the inner chamber, the bushing having a bushing port that is movable into and out of alignment with the control land of a pilot valve to control hydraulic fluid flow through the valve;
   a bushing actuator coupled to move the bushing in the inner chamber based on a first operational condition of the hydraulically controlled system;
   a pilot valve slidably mounted in the bushing, the pilot valve having a flow passage which allows hydraulic fluid to flow through the bushing when in a first position in the bushing and prevents the flow of hydraulic fluid when the pilot valve is in a second position in the bushing, and
   a pilot valve actuator coupled to move the pilot valve between the first position and the second position based on an error signal, the error signal generated on a comparison of a set point and a second operating condition of the hydraulically controlled system.
2. A mechanical controller as in clause 1 wherein the hydraulically controlled system is a servomotor controlling a water valve.
3. A mechanical controller as in any preceding clause wherein the first operating condition is a displacement of the servomotor applied to control the water valve, and the second operating condition is a rate of displacement of the servomotor.
4. A mechanical controller as in any preceding clause wherein a source of hydraulic fluid is connectable the hydraulic fluid input port of the valve housing and the controller is activated by applying pressurized hydraulic fluid to the hydraulic fluid input port.
5. A mechanical controller as in any preceding clause wherein the set point is a manually established set point.
6. A mechanical controller as in any preceding clause wherein the mechanical controller is a mechanical hydraulic amplifier.
7. A mechanical controller as in any preceding clause is a closed loop feedback controller wherein the error signal correlates to hydraulic fluid flow from the output port of the valve housing.
8. A mechanical controller for a hydraulically controlled servomotor for controlling a water valve, the controller comprising:
   a valve housing including an inner chamber, a hydraulic fluid input port and a hydraulic fluid output port, wherein the hydraulic fluid output port is connectable to a hydraulic fluid input port of the hydraulically controlled system;
   a bushing slidably mounted in the inner chamber, the bushing having an output port that is movable into and out of alignment with the control land of a pilot valve to control hydraulic fluid flow through the valve;
   a bushing lever arm coupled to move the bushing in the inner chamber based on a first operation condition of the hydraulically controlled system;
   a pilot valve slidably mounted in the bushing, the pilot valve having a control land which allows hydraulic fluid to flow through the bushing when not in alignment with the bushing output port and reduces the flow through the bushing as the control land moves into alignment with the bushing output port, and
   a pilot valve lever arm coupled to move the pilot valve based on an error signal, the error signal generated by balancing the pilot valve lever arm between a set point and a second operating condition of the hydraulically controlled system.
9. A mechanical controller as in clause 8 wherein the hydraulically controlled system is a servomotor controlling a water valve.
10. A mechanical controller as in any of clauses 8 or 9 wherein the first operating condition is a displacement of the servomotor applied to control the water valve, and the second operating condition is a rate of displacement of the servomotor.
11. A mechanical controller as in any of clauses 8 to 10 wherein a source of hydraulic fluid is connectable the hydraulic fluid input port of the valve housing and the controller is activated by applying pressurized hydraulic fluid to the hydraulic fluid input port.
12. A mechanical controller as in any of clauses 8 to 11 wherein the set point is a manually established set point.
13. A mechanical controller as in any of clauses 8 to 12 wherein the mechanical controller is a mechanical hydraulic amplifier.
14. A mechanical controller as in any of clauses 8 to 13 is a closed loop feedback controller wherein the error signal correlates to hydraulic fluid flow from the output port of the valve housing.
15. A method for controlling a hydraulically controlled system comprising:
   applying hydraulic fluid to the hydraulically controlled system using an electronically controlled hydraulic amplifier;
   switching control from the electronically controlled hydraulic amplifier to a mechanically controlled hydraulic valve controller;
   establishing a desired set point for the mechanically controlled hydraulic valve controller;
   determining an error signal between the desired set point and an actual operating condition of the hydraulically controlled system, and
   applying the error signal to the mechanically controlled hydraulic valve controller which adjust the hydraulic fluid flow to the hydraulically controlled system to reduce the error.
16. A method as in clause 15 further comprising applying a feedback condition to the mechanically controlled hydraulic valve controller to provide a secondary adjustment to the hydraulic fluid flow, where the feedback condition allows a correcting action of the hydraulically controlled system to an input or output condition that is not in equilibrium.
17. A method as in clause 15 or 16 wherein the hydraulically controlled system is a servomotor controlling a water valve, and the desired set point is a displacement of the servomotor that determines a operating position of the water valve.
18. A method as in any of clauses 15 to 17 further comprising applying a feedback condition to the mechanically controlled hydraulic valve controller to provide a secondary adjustment to the hydraulic fluid flow, where the feedback condition represents a rate of the displacement of the servomotor.
19. A method as in any of clauses 15 to 18 further comprising shutting off the hydraulic fluid flow to the mechanically controlled hydraulic valve and activating the electronically controlled hydraulic amplifier.
20. A method as in any of clauses 15 to 19 wherein applying the error signal establishes a closed loop feedback control wherein the error signal correlates to hydraulic fluid flow from the output port of the valve housing.

## Claims

1. A mechanical controller (10) for a hydraulically controlled system, the controller comprising:
a valve housing (27) including an inner chamber (28), a hydraulic fluid input port (22) and a hydraulic fluid output port (26), wherein the hydraulic fluid output port is connectable to the hydraulically controlled system (14,15);
a bushing (32) mounted in the inner chamber, the bushing having a bushing port (40,42) that is movable into and out of alignment with the control land (44) of a pilot valve (34) to control hydraulic fluid flow through the valve;
a bushing actuator (38) coupled to move the bushing in the inner chamber based on a first operational condition (13,58) of the hydraulically controlled system;
a pilot valve (34) slidably mounted in the bushing, the pilot valve having a flow passage (44) which allows hydraulic fluid to flow through the bushing when in a first position in the bushing and prevents the flow of hydraulic fluid when the pilot valve is in a second position in the bushing, and
a pilot valve actuator (46) coupled to move the pilot valve between the first position and the second position based on an error signal (56), the error signal generated on a comparison of a set point (48) and a second operating condition (54) of the hydraulically controlled system.

2. A mechanical controller as in claim 1 wherein the hydraulically controlled system is a servomotor (14) controlling a water valve.

3. A mechanical controller as in claim 2 wherein the first operating condition (54) is a displacement of the servomotor applied to control the water valve, and the second operating condition (13,58) is a rate of displacement of the servomotor.

4. A mechanical controller as in any preceding claim wherein a source (20) of hydraulic fluid is connectable the hydraulic fluid input port (22) of the valve housing and the controller (10) is activated (24) by applying pressurized hydraulic fluid to the hydraulic fluid input port.

5. A mechanical controller as in any preceding claim wherein the set point (48) is a manually (52) established set point.

6. A mechanical controller as in any preceding claim wherein the mechanical controller (10) is a mechanical hydraulic amplifier.

7. A mechanical controller as in any preceding claim is a closed loop feedback controller wherein the error signal (56) correlates to hydraulic fluid flow from the output port of the valve housing.

8. A method for controlling a hydraulically controlled system (15,14) comprising:
applying hydraulic fluid (16) to the hydraulically controlled system using an electronically controlled hydraulic amplifier (12);
switching (24,25) control from the electronically controlled hydraulic amplifier to a mechanically controlled hydraulic valve controller (10);
establishing a desired set point (48,52) for the mechanically controlled hydraulic valve controller;
determining an error signal (56) between the desired set point and an actual operating condition (54) of the hydraulically controlled system, and
applying (34) the error signal to the mechanically controlled hydraulic valve controller which adjust the hydraulic fluid flow to the hydraulically controlled system to reduce the error.

9. A method as in claim 8 further comprising applying a feedback condition (13,58) to the mechanically controlled hydraulic valve controller to provide a secondary adjustment to the hydraulic fluid flow, where the feedback condition allows a correcting action of the hydraulically controlled system to an input or output condition that is not in equilibrium.

10. A method as in claim 8 or claim 9 wherein the hydraulically controlled system is a servomotor (14) controlling a water valve, and the desired set point (48) is a displacement of the servomotor that determines an operating position of the water valve.
